# EUROPEAN PATENT APPLICATION

(11) **EP 3 026 259 A1**
(43) Date of publication of application: **01.06.2016**
(21) Application number: 15195221.5
(22) Date of filing: 18.11.2015
(51) Int. Cl.: F03D 1/06, B29C 70/52, B29D 99/00, B29C 43/18, B32B 3/00

(54) **METHODS FOR MANUFACTURING A SPAR CAP FOR A WIND TURBINE ROTOR BLADE**

(30) Priority: 25.11.2014 US 201414552518
(71) Applicant: General Electric Company, Schenectady, NY 12345 (US)
(72) Inventor: YARBROUGH, Aaron A., Greenville, NY New York 29615 (US); GEIGER, Shannon B., Greenville, SC South Carolina 29615-4614 (US); CARUSO, Christopher Daniel, Greenville, SC South Carolina 29615 (US)
(74) Representative: Bedford, Grant Richard

(57) **Abstract**

Methods of manufacturing spar caps 20 for a rotor blade 16 of a wind turbine 10 are disclosed. The method includes providing a plurality of pultrusions 40 constructed of one or more fibers or fiber bundles cured via a resin material. Another step includes tapering the ends of the pultrusions 40 at a predetermined angle. The method also includes arranging the tapered pultrusions 40 in a mold of the spar cap. The method also includes joining the plurality of pultrusions 40 together so as to form the spar cap.

## Description

The present subject matter relates generally to rotor blades of a wind turbine and, more particularly, to methods for manufacturing spar caps for a wind turbine rotor blade.

Wind power is considered one of the cleanest, most environmentally friendly energy sources presently available, and wind turbines have gained increased attention in this regard. A modem wind turbine typically includes a tower, generator, gearbox, nacelle, and one or more rotor blades. The rotor blades capture kinetic energy from wind using known foil principles and transmit the kinetic energy through rotational energy to turn a shaft coupling the rotor blades to a gearbox, or if a gearbox is not used, directly to the generator. The generator then converts the mechanical energy to electrical energy that may be deployed to a utility grid.

Wind turbine rotor blades generally include a body shell formed by two shell halves of a composite laminate material. The shell halves are generally manufactured using molding processes and then coupled together along the corresponding ends of the rotor blade. In general, the body shell is relatively lightweight and has structural properties (e.g., stiffness, buckling resistance and strength) which are not configured to withstand the bending moments and other loads exerted on the rotor bade during operation. To increase the stiffness, buckling resistance and strength of the rotor blade, the body shell is typically reinforced using one or more structural components (e.g. opposing spar caps with a shear web configured therebetween) that engage the inner surfaces of the shell halves.

The spar caps may be constructed of various materials, including but not limited to glass fiber laminate composites and/or carbon fiber laminate composites. More specifically, modem spar caps are often constructed of pultruded composites that are less expensive than traditional composites, as the pultruded composites can be produced in thicker sections. As used herein, the terms "pultruded composites," "pultrusions," or similar are generally defined as reinforced materials (e.g. fibers or woven or braided strands) that are impregnated with a resin and pulled through a heated stationary die such that the resin cures or undergoes polymerization. As such, the pultrusion process is typically characterized by the continuous process of composite materials that produces composite parts having a constant cross-section. Thus, a plurality of pultrusions can be vacuum infused together in a mold to form the spar caps.

The ends of the pultruded composites, however, can create areas of local stress concentrations, thereby causing the part to delaminate. In addition, the unaltered ends may cause vacuum bag bridging issues which can lead to defects in the resulting part.

Accordingly, there is a need for an improved pultruded spar cap that addresses the aforementioned issues. More specifically, a spar cap constructed with one or more pultrusions having tapered ends would be advantageous.

Various aspects and advantages of the invention will be set forth in part in the following description, or may be clear from the description, or may be learned through practice of the invention.

In one aspect of the present disclosure, a method of manufacturing a rotor blade component of a wind turbine is disclosed. The method includes providing a plurality of pultrusions constructed of one or more fibers or fiber bundles cured via a resin material. Another step includes tapering the ends of the pultrusions at a predetermined angle. The method also includes arranging the tapered pultrusions in a mold of the rotor blade component. The method also includes joining the plurality of pultrusions together so as to form the rotor blade component.

In one embodiment, the rotor blade component may include at least one of a spar cap, a shear web, a root ring, or any other rotor blade component that can benefit from being constructed of a pultrusion. In another embodiment, the method may also include arranging the tapered pultrusions in the mold of the rotor blade component such that the tapered ends extend in a substantially span-wise direction when installed on a rotor blade of the wind turbine. Alternatively, the method may include arranging the tapered pultrusions in the mold of the rotor blade component such that the tapered ends extend in a substantially chord-wise direction when installed on a rotor blade of the wind turbine.

In further embodiments, the predetermined angle may be from about 15 degrees to about 35 degrees (e.g. about 20 degrees) so as to reduce the stress concentration effect at the ply ends. In additional embodiments, the step of joining the plurality of pultrusions together so as to form the rotor blade component may further include vacuum infusing the cured pultrusions together or bonding the pultrusions together. More specifically, in certain embodiments, the pultrusions may be bonded together via at least one of an adhesive, a pre-preg material, a semi-preg material, or similar. In particular embodiments, the fibers or fiber bundles may include glass fibers, carbon fibers, or any other suitable fibers or combinations thereof. Further, the resin material may include any suitable resin, such as a polymer or more specifically, polyester, polyurethane, polybutylene terephthalate (PBT), polyethylene terephthalate (PET), vinyl ester, epoxy, or similar.

In another aspect, the present disclosure is directed to a method of manufacturing a rotor blade component of a wind turbine. The method includes providing a plurality of pultrusions constructed of one or more fibers or fiber bundles cured together via at least one resin material. Another step includes tapering at least one end of one of the plurality of pultrusions. Still another step includes arranging and joining the plurality of pultrusions together so as to form the rotor blade component. It should be understood that the method may also include any of the additional steps and/or features as described herein.

In yet another aspect, the present disclosure is directed to a rotor blade of a wind turbine. The rotor blade includes a blade root and a blade tip, leading and trailing ends, suction and pressure sides, and at least one structural component configured with either or both of the pressure or suction sides. The structural component is constructed of a plurality of pultrusions bonded together. Each of the pultrusions is formed of a plurality of fibers or fiber bundles cured together via a resin material. Further, at least one of the pultrusions includes a tapered end formed into the pultrusion before the plurality of pultrusions are bonded together. The rotor blade may also include any of the additional features described herein. For example, in certain embodiments, the structural component may be a spar cap, a shear web, a root ring, or any other suitable rotor blade component.

Various features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention. In the drawing:
FIG. 1 illustrates a perspective view of one embodiment of a wind turbine according to the present disclosure;
FIG. 2 illustrates a perspective view of a rotor blade according to the present disclosure;
FIG. 3 illustrates a cross-sectional view of the rotor blade of FIG. 2 along line 3-3;
FIG. 4 illustrates a cross-sectional view of one embodiment of a pultruded spar cap according to conventional construction;
FIG. 5 illustrates a cross-sectional view of one embodiment of a pultruded spar cap according to the present disclosure;
FIG. 6 illustrates a cross-sectional view of another embodiment of a pultruded spar cap according to the present disclosure; and
FIG. 7 illustrates a flow diagram of a method of manufacturing a rotor blade component according to the present disclosure.

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

Generally, the present subject matter is directed to a pultruded spar cap of a rotor blade of a wind turbine and methods of manufacturing same. For example, in one embodiment, the method includes providing a plurality of pultrusions and tapering at least one end of the pultrusions. As such, the tapered pultrusions can be placed into a blade shell mold or a spar cap mold and vacuum-infused together to form a spar cap such that no further machining is required once the part of complete.

By tapering each pultrusion before it is placed into a blade shell or a spar-cap mold, the present disclosure provides many advantages not present in the prior art. For example, the tapered ends of the pultrusions reduce local stress concentrations in the rotor blade at the ply drops. In addition, the effective fatigue resistance to onset of delamination is improved beyond an unaltered thicker ply edge. Moreover, if infusion methods are used to join the pultrusions together, then the tapered ends of the pultrusions improves the manufacturing process by providing a vacuum bag an easier surface to cover and prevent bridging. As used herein, the term "tapering" or similar generally refers to gradually reducing the thickness of an object towards one end. As such, the ends of the pultrusions may be tapered at a certain angle and/or chamfered or beveled.

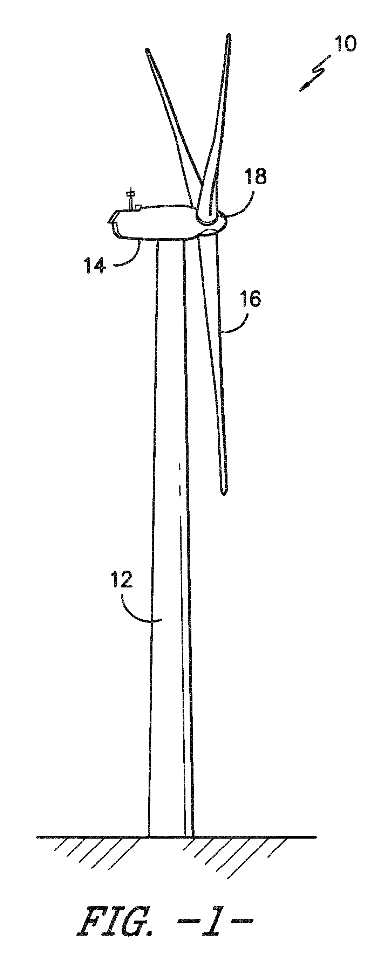

Referring now to the drawings, FIG. 1 illustrates a perspective view of a horizontal axis wind turbine 10. It should be appreciated that the wind turbine 10 may also be a vertical-axis wind turbine. As shown in the illustrated embodiment, the wind turbine 10 includes a tower 12, a nacelle 14 mounted on the tower 12, and a rotor hub 18 that is coupled to the nacelle 14. The tower 12 may be fabricated from tubular steel or other suitable material. The rotor hub 18 includes one or more rotor blades 16 coupled to and extending radially outward from the hub 18. As shown, the rotor hub 18 includes three rotor blades 16. However, in an alternative embodiment, the rotor hub 18 may include more or less than three rotor blades 16. The rotor blades 16 rotate the rotor hub 18 to enable kinetic energy to be transferred from the wind into usable mechanical energy, and subsequently, electrical energy. Specifically, the hub 18 may be rotatably coupled to an electric generator (not illustrated) positioned within the nacelle 14 for production of electrical energy.

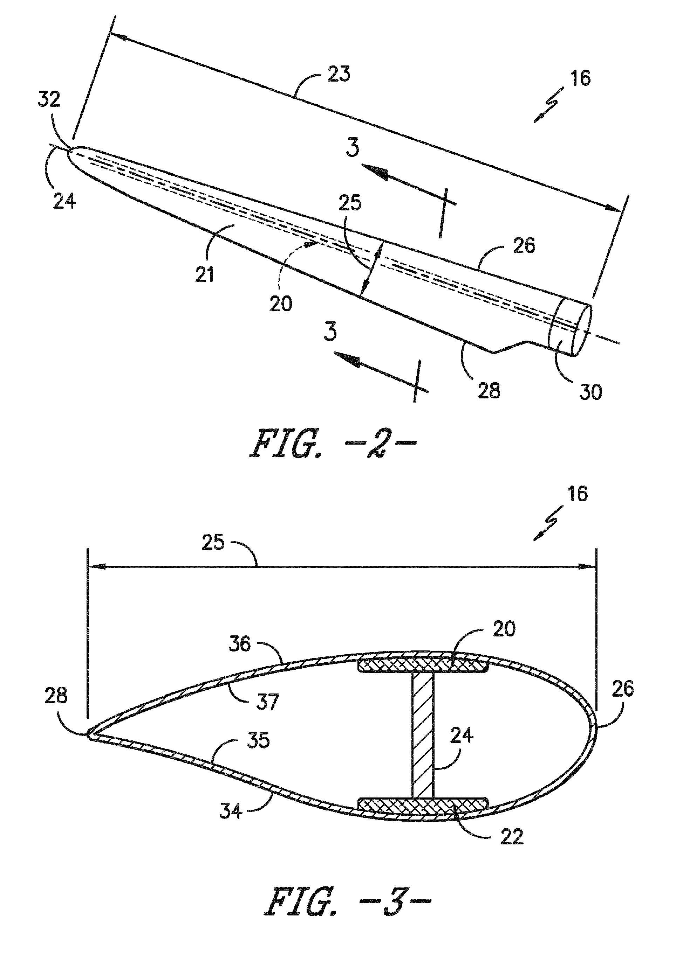

Referring to FIGS. 2 and 3, one of the rotor blades 16 of FIG. 1 is illustrated in accordance with aspects of the present subject matter. In particular, FIG. 2 illustrates a perspective view of the rotor blade 16, whereas FIG. 3 illustrates a cross-sectional view of the rotor blade 16 along the sectional line 3-3 shown in FIG. 2. As shown, the rotor blade 16 generally includes a blade root 30 configured to be mounted or otherwise secured to the hub 18 (FIG. 1) of the wind turbine 10 and a blade tip 32 disposed opposite the blade root 30. A body shell 21 of the rotor blade generally extends between the blade root 30 and the blade tip 32 along a longitudinal axis 27. The body shell 21 may generally serve as the outer casing/covering of the rotor blade 16 and may define a substantially aerodynamic profile, such as by defining a symmetrical or cambered airfoil-shaped cross-section. The body shell 21 may also define a pressure side 34 and a suction side 36 extending between leading and trailing ends 26, 28 of the rotor blade 16. Further, the rotor blade 16 may also have a span 23 defining the total length between the blade root 30 and the blade tip 32 and a chord 25 defining the total length between the leading edge 26 and the trialing edge 28. As is generally understood, the chord 25 may generally vary in length with respect to the span 23 as the rotor blade 16 extends from the blade root 30 to the blade tip 32.

In several embodiments, the body shell 21 of the rotor blade 16 may be formed as a single, unitary component. Alternatively, the body shell 21 may be formed from a plurality of shell components. For example, the body shell 21 may be manufactured from a first shell half generally defining the pressure side 34 of the rotor blade 16 and a second shell half generally defining the suction side 36 of the rotor blade 16, with such shell halves being secured to one another at the leading and trailing ends 26, 28 of the blade 16. Additionally, the body shell 21 may generally be formed from any suitable material. For instance, in one embodiment, the body shell 21 may be formed entirely from a laminate composite material, such as a carbon fiber reinforced laminate composite or a glass fiber reinforced laminate composite. Alternatively, one or more portions of the body shell 21 may be configured as a layered construction and may include a core material, formed from a lightweight material such as wood (e.g., balsa), foam (e.g., extruded polystyrene foam) or a combination of such materials, disposed between layers of laminate composite material.

Referring particularly to FIG. 3, the rotor blade 16 may also include one or more longitudinally extending structural components configured to provide increased stiffness, buckling resistance and/or strength to the rotor blade 16. For example, the rotor blade 16 may include a pair of longitudinally extending spar caps 20, 22 configured to be engaged against the opposing inner surfaces 35, 37 of the pressure and suction sides 34, 36 of the rotor blade 16, respectively. Additionally, one or more shear webs 24 may be disposed between the spar caps 20, 22 so as to form a beam-like configuration. The spar caps 20, 22 may generally be designed to control the bending stresses and/or other loads acting on the rotor blade 16 in a generally spanwise direction (a direction parallel to the span 23 of the rotor blade 16) during operation of a wind turbine 10. Similarly, the spar caps 20, 22 may also be designed to withstand the spanwise compression occurring during operation of the wind turbine 10.

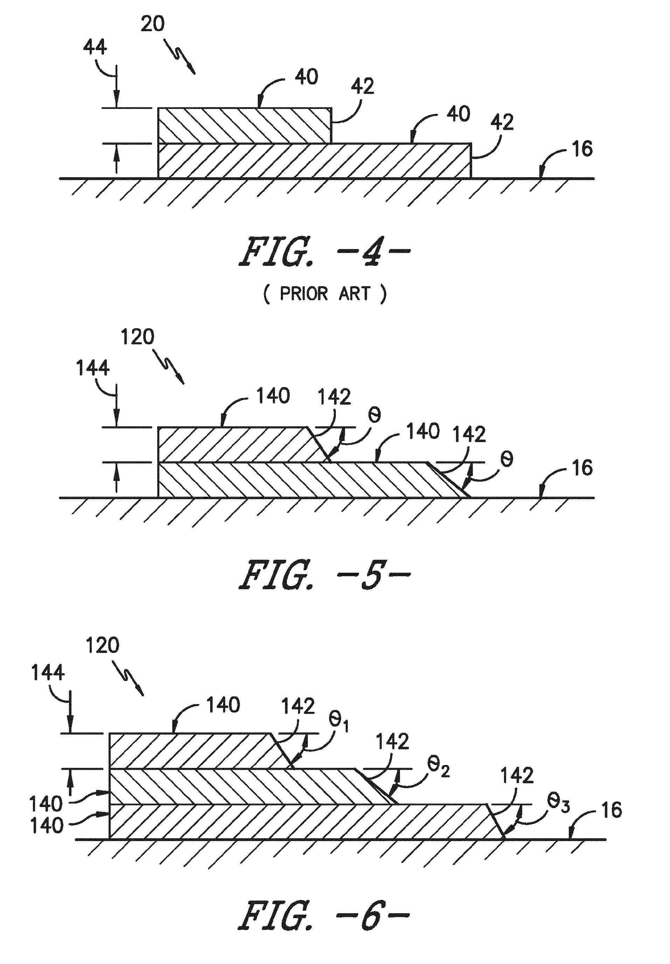

Referring now to FIG. 4, a partial, cross-sectional view of one embodiment of a spar cap 20 according to conventional construction is illustrated. As shown, the spar cap 20 includes a plurality of pultrusions 40 infused together. Each of the pultrusions 40 has opposing ends 42 (only one of which is shown) containing a certain ply drop equal to the thickness 44 of the ply. As mentioned, the ends 42 of the pultruded composites can create areas of local stress concentrations.

As such, FIGS. 5 and 6 illustrate partial, cross-sectional views of various embodiments of a spar cap 120 according to the present disclosure that address such issues. As shown, the spar cap 120 includes a plurality of prefabricated pultrusions 140 bonded or infused together. More specifically, each of the pultrusions 140 may be constructed of a plurality of fibers or fiber bundles joined together via a cured resin material. In certain embodiments, the resin material may include any suitable resin, such as a polymer or more specifically, polyester, polyurethane, polybutylene terephthalate (PBT), polyethylene terephthalate (PET), vinyl ester, epoxy, or similar. Moreover, in particular embodiments, the fibers may include glass fibers, carbon fibers, or any other suitable fibers.

In addition, each of the pultrusions 140 has opposing ends 142 (only one of which is shown). Further, as mentioned, at least one of the ends 142 of the pultrusions 140 is tapered or chamfered before the plurality of pultrusions 140 are joined together (e.g. before the pultrusions 140 are placed in the spar cap mold). Thus, the resulting pultruded part has one or more tapered ends 142 that can be placed into a mold of a rotor blade component and vacuum infused or bonded with other pultruded parts to form the desired rotor blade component. Accordingly, the pultruded rotor blade components of the present disclosure do not require further machining after the part is infused or bonded together.

In certain embodiments, the ends 142 of the pultrusions 140 may be chamfered or tapered to a certain angle to achieve certain properties. For example, the tapered ends 142 may have an angle of between about 15 degrees to about 35 degrees, more specifically about 20 degrees, so as to reduce the stress concentration effect at the ply ends and/or to prevent delamination between the layers. In still further embodiments, the tapered ends 142 may have an angle of less than 15 degrees or greater than 35 degrees. Further, as shown in FIG. 5, the tapered angles of the ends 142 of the pultrusions 140 may be equal (e.g. as illustrated by θ) or, as shown in FIG. 6, the tapered angles of the ends 142 may be unequal (e.g. as illustrated by θ₁, θ₂, θ₃). More specifically, in certain embodiments, the angle θ may vary as a function of the thickness of the pultrusions 140.

In further embodiments, the pultrusions 140 may be used to construct various other rotor blade components, in addition to the spar cap 120. For example, in certain embodiments, the pultrusions 140 may be used to construct the shear web 24, a root ring, or any other rotor blade component that can benefit from being constructed of a pultrusion as described herein.

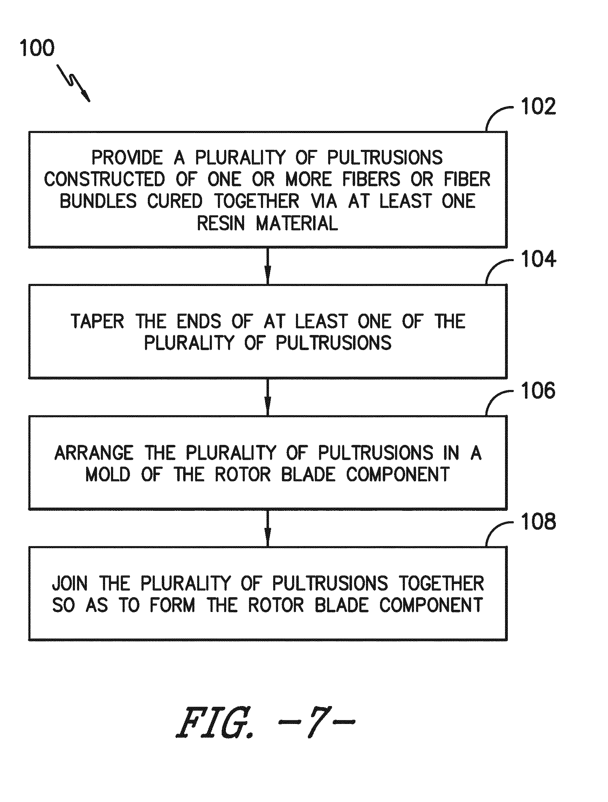

The present disclosure is also directed to methods for manufacturing rotor blade components as described herein. For example, as shown in FIG. 7, a flow diagram of a method 100 of manufacturing a rotor blade component of a wind turbine is disclosed. At 102, the method 100 includes providing a plurality of pultrusions constructed of one or more fibers or fiber bundles cured together via at least one resin material. Another step 104 includes tapering the ends of at least one of the plurality of pultrusions at a predetermined angle. The method 100 also includes arranging the plurality of pultrusions in a mold of the rotor blade component (step 106). The method 100 also includes joining the plurality of pultrusions together so as to form the rotor blade component (step 108).

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiment of the present invention are defined by the following numbered clauses:
1. A method of manufacturing a rotor blade component of a wind turbine, the method comprising:
   providing a plurality of pultrusions constructed of one or more fibers or fiber bundles cured together via a resin material;
   tapering the ends of the pultrusions at a predetermined angle;
   arranging the tapered pultrusions in a mold of the rotor blade component; and, joining the plurality of pultrusions together so as to form the rotor blade component.
2. The method of clause 1, wherein the rotor blade component comprises at least one of a spar cap, a shear web, or a root ring.
3. The method of any preceding clause, further comprising arranging the tapered pultrusions in the mold of the rotor blade component such that the tapered ends extend in a substantially span-wise direction when installed on a rotor blade of the wind turbine.
4. The method of any preceding clause, further comprising arranging the tapered pultrusions in the mold of the rotor blade component such that the tapered ends extend in a substantially chord-wise direction when installed on a rotor blade of the wind turbine.
5. The method of any preceding clause, wherein the predetermined angle is from about 15 degrees to about 35 degrees.
6. The method of any preceding clause, wherein joining the plurality of pultrusions together so as to form the rotor blade component further comprises at least one of vacuum infusing the pultrusions together or bonding the pultrusions together.
7. The method of any preceding clause, wherein the pultrusions are bonded together via at least one of an adhesive, a pre-preg material, or a semi-preg material.
8. The method of any preceding clause, wherein the fibers or fiber bundles comprise at least one of glass fibers or carbon fibers.
9. The method of any preceding clause, wherein the at least one resin material further comprises at least one of polyester, polyurethane, polybutylene terephthalate (PBT), polyethylene terephthalate (PET), vinyl ester, or epoxy.
10. A method of manufacturing a rotor blade component of a wind turbine, the method comprising:
   providing a plurality of pultrusions constructed of one or more fibers or fiber bundles cured together via at least one resin material;
   tapering at least one end of one of the plurality of pultrusions; and,
   arranging and joining the plurality of pultrusions together so as to form the rotor blade component.
11. The method of any preceding clause, wherein the rotor blade component comprises at least one of a spar cap, a shear web, or a root ring.
12. The method of any preceding clause, further comprising arranging the tapered pultrusions in the mold of the rotor blade component such that the tapered ends extend in a substantially span-wise direction when installed on a rotor blade of the wind turbine.
13. The method of any preceding clause, further comprising arranging the tapered pultrusions in the mold of the rotor blade component such that the tapered ends extend in a substantially chord-wise direction when installed on a rotor blade of the wind turbine.
14. The method of any preceding clause, wherein the at least one tapered end comprises an angle of between about 15 degrees to about 35 degrees.
15. The method of any preceding clause, wherein joining the plurality of pultrusions together so as to form the rotor blade component further comprises at least one of vacuum infusing the pultrusions together or bonding the pultrusions together.
16. The method of any preceding clause, wherein the pultrusions are bonded together via at least one of an adhesive, a pre-preg material, or a semi-preg material.
17. The method of any preceding clause, wherein the fibers or fiber bundles comprise at least one of glass fibers or carbon fibers.
18. The method of any preceding clause, wherein the at least one resin material further comprises at least one of polyester, polyurethane, polybutylene terephthalate (PBT), polyethylene terephthalate (PET), vinyl ester, or epoxy.
19. A rotor blade of a wind turbine, the rotor blade comprising:
   a blade root and a blade tip;
   a leading edge and a trailing edge;
   a suction side and a pressure side; and,
   at least one structural component configured with either or both of the pressure or suction sides, the structural component comprising a plurality of pultrusions bonded together, each of the pultrusions constructed of a plurality of fibers or fiber bundles cured together via a resin material, at least one of the pultrusions comprising a tapered end formed into the pultrusion before the plurality of pultrusions are bonded together.
20. The rotor blade of any preceding clause, wherein the structural component comprises at least one of a spar cap, a shear web, or a root ring.

## Claims

1. A method of manufacturing a rotor blade component of a wind turbine (10), the method comprising:
providing a plurality of pultrusions (40) constructed of one or more fibers or fiber bundles cured via a resin material;
tapering the ends (42) of the pultrusions (40) at a predetermined angle;
arranging the tapered pultrusions (40) in a mold of the rotor blade component; and,
joining the plurality of pultrusions (40) together so as to form the rotor blade component.

2. The method of claim 1, wherein the rotor blade component comprises at least one of a spar cap (20), a shear web (24), or a root ring.

3. The method of any preceding claim, further comprising arranging the tapered pultrusions (40) in the mold of the rotor blade component such that the tapered ends (42) extend in a substantially span-wise direction when installed on a rotor blade (16) of the wind turbine (10).

4. The method of any preceding claim, further comprising arranging the tapered pultrusions (40) in the mold of the rotor blade component such that the tapered ends (42) extend in a substantially chord-wise direction when installed on a rotor blade (16) of the wind turbine (10).

5. The method of any preceding claim, wherein the predetermined angle is from about 15 degrees to about 35 degrees.

6. The method of any preceding claim, wherein joining the plurality of pultrusions (40) together so as to form the rotor blade component further comprises at least one of vacuum infusing the pultrusions (40) together or bonding the pultrusions (40) together.

7. The method of claim 6, wherein the pultrusions (40) are bonded together via at least one of an adhesive, a pre-preg material, or a semi-preg material.

8. The method of any preceding claim, wherein the fibers or fiber bundles comprise at least one of glass fibers or carbon fibers.

9. The method of any preceding claim, wherein the at least one resin material further comprises at least one of polyester, polyurethane, polybutylene terephthalate (PBT), polyethylene terephthalate (PET), vinyl ester, or epoxy.

10. A method of manufacturing a rotor blade component of a wind turbine (10), the method comprising:
providing a plurality of pultrusions (40) constructed of one or more fibers or fiber bundles cured together via at least one resin material;
tapering at least one end (42) of one of the plurality of pultrusions (40); and,
arranging and joining the plurality of pultrusions (40) together so as to form the rotor blade component.

11. The method of claim 10, wherein the rotor blade component comprises at least one of a spar cap (20), a shear web (24), or a root ring.

12. The method of claim 10 or claim 11, further comprising arranging the tapered pultrusions (40) in the mold of the rotor blade component such that the tapered ends extend in a substantially span-wise direction when installed on a rotor blade (16) of the wind turbine (10).

13. The method of any of claims 10 to 12, further comprising arranging the tapered pultrusions (40) in the mold of the rotor blade component such that the tapered ends extend in a substantially chord-wise direction when installed on a rotor blade (16) of the wind turbine (10).

14. The method of any of claims 10 to 13, wherein joining the plurality of pultrusions (40) together so as to form the rotor blade component further comprises at least one of vacuum infusing the pultrusions (40) together or bonding the pultrusions (40) together.

15. A rotor blade (16) of a wind turbine (10), the rotor blade (16) comprising:
a blade root (30) and a blade tip (32);
a leading edge (26) and a trailing edge (28);
a suction side (36) and a pressure side (34); and
at least one structural component configured with either or both of the pressure or suction sides (34, 36), the structural component comprising a plurality of pultrusions (40) bonded together, each of the pultrusions (40) constructed of a plurality of fibers or fiber bundles cured together via a resin material, at least one of the pultrusions (40) comprising a tapered end (42) formed into the pultrusion (40) before the plurality of pultrusions (40) are bonded together.
